(19) Europäisches Patentamt

European Patent Office

Office européen des brevets

(11) **EP 0 851 841 B1**

(12) **EUROPEAN PATENT SPECIFICATION**

(45) Date of publication and mention
of the grant of the patent:
**28.02.2001   Bulletin 2001/09**

(51) Int Cl.[7]: **C01G 45/00**, C01G 1/12

(86) International application number:
**PCT/SE96/01165**

(21) Application number: **96932117.3**

(22) Date of filing: **20.09.1996**

(87) International publication number:
**WO 97/11032 (27.03.1997 Gazette 1997/14)**

(54) **PROCESS FOR THE PREPARATION OF MANGANESE SULPHIDE**

VERFAHREN ZUR HERSTELLUNG VON MANGANSULFID

PROCEDE DE PREPARATION DE SULFURE MANGANEUX

(84) Designated Contracting States:
**AT BE CH DE DK ES FR GB IT LI LU NL SE**

(30) Priority:  **22.09.1995  SE 9503322**

(43) Date of publication of application:
**08.07.1998   Bulletin 1998/28**

(73) Proprietor: **HÖGANÄS AB**
**263 83 Höganäs (SE)**

(72) Inventors:
 • **ENGSTRÖM, Ulf**
  **S-263 58 Höganäs (SE)**

 • **ARVIDSSON, Johan**
  **S-260 41 Nyhamnsläge (SE)**

(74) Representative: **Thylén, Eva Matilda et al**
**AWAPATENT AB,**
**Berga Allé 1**
**254 52 Helsingborg (SE)**

(56) References cited:
**US-A- 4 676 970**

 • **PATENT ABSTRACTS OF JAPAN, Vol. 12, No. 181, C-499; & JP,A,62 288 116 (MITSUI MINING & SMELTING CO LTD), 15 December 1987.**

**Description**

The present invention concerns a process for the preparation of a manganese sulphide. More specifically, the present invention concerns a reduction process for the preparation of manganese sulphide from manganese sulphate at an elevated temperature.

In the field of powder metallurgy manganese sulphide (MnS) has found increasing utility as an additive for improving the machinability of sintered parts. As the market for PM products is expanding, the need for industrially applicable, cost effective and environmentally acceptable processes is obvious.

The US patent 4 676 970 discloses a process for the preparation of MnS by melting manganese and sulphur. More specifically this patent discloses a process, according to which an aqueous manganese sulphate solution is subjected to electrolysis for the preparation of manganese metal, which in particle form is mixed with particulate sulphur. In the obtained mixture, a chemical reaction is initiated by adding eg aluminium and barium peroxide. A very pure MnS product can be obtained if highly pure starting materials are used. Furthermore the patent teaches that it would not be possible to produce MnS on a large scale for commercial purposes by thermal reduction of manganese sulphate due to sulphur pollution and low purity.

The JP application 62-288116 discloses a process for the preparation of MnS, whereby an Mn compound such as e.g. MnS04 is heated to a temperature between 350 and 700°C in $H_2S$ atmosphere. Another process for the production of MnS disclosed in this application concerns the burning of manganese oxide or metallic manganese in carbon disulphide atmosphere. The Japanese patent application also discloses a method wherein an excess amount of aqueous ammonia is added in the boiling state to an aqueous manganese (II) solution containing potassium oxalate and hydrogen sulphide gas.

In accordance with the present invention, it has unexpectedly, and in contrast to the teaching in the above-mentioned patent, been found that an MnS product having the required machinability-improving properties can be prepared by thermal reducion of manganese sulphate in a process suitable for large-scale commercial production. From an industrial point of view, this process offers important advantages including the possibility to use inexpensive starting materials and available equipment. Furthermore, the electrolysis step, which is necessary according to the known process, is eliminated. The purity of the obtained product is sufficient for industrial purposes and a remarkably pure product can be obtained even without highly pure starting materials as required in the known process.

A thorough and extensive study has shown that the thermal reduction can be carried out both as a dry and as a wet process and that satisfactory results can be obtained in many different ways. Thus, the reduction agent can be selected among a wide variety of known reduction agents. Preferably, the reduction agent is selected from the group consisting of pit coal, charcoal, lignite, gaseous hydrogen, carbon monoxide, since the environmentally accepted products, carbon dioxide or water, are then obtained as by-products. When a solid carbonaceous reduction agent is used the reduction is preferably carried out in a reducing atmosphere. By optimizing the reaction parameters, a small and environ-mentally acceptable amount of polluting sulphur containing by-products is obtained.

The process according to the invention is defined in the appended claims.

The dry method includes heating manganese sulphate in the presence of a gaseous reduction agent, such as hydrogen gas or carbon monoxide, at a temperature of at least 750°C and more specifically at least 800°C. This method is preferably carried out in a fluidized bed, wherein the manganese sulphate is in the form of agglomerates having a particle size below 10 mm. Commercially this process is preferably carried out in a shaft furnace and sulphur dioxide can be added in order to increase the yield of manganese sulphide. An alternative dry method is mixing particulate manganese sulphate with particulate carbon in the form of e g pit coal or charcoal at a temperature of at least 750°C and more specifically at least 800°C, whereby the particle size of manganese sulphate should preferably be less than 1 mm and the particle size of the carbon should preferably be less than about 5 mm.

The wet method can be carried out by mixing particulate manganese sulphate, particulate coal having a mean particle size of less than about 5 mm, and water, heating the obtained slurry to a temperature of at least 750°C during a period sufficient for allowing essentially complete reduction of manganese sulphate to manganese sulphide. Preferably, this method is also carried out in a reducing atmosphere such as a carbon monoxide containing atmosphere.

The process according to the invention provides an industrially attractive alternative as the starting materials are inexpensive and readily available. Manganese sulphate is widely used as a fertiliser and the reduction agents are also commonly used and inexpensive, which contributes to the low cost of the process. An additional advantage is that the process can be carried out in conventional equipment, e.g. furnaces, such as belt furnaces and tunnel kilns optionally simultaneously with the other processes conventionally carried out in such equipment.

The MnS product obtained according to the present process may include up to 25% by weight of MnO. Quite unexpectedly, it has been found, and this is well documented, that this relatively high percentage of MnO does not negatively influence the machinability-improving properties. It has actually been found that in certain cases the content of MnO can improve the machinability as compared with a purer MnS product, i.e. a product containing 1% by weight or less of impurities/byproducts. In addition to MnO the product according to the invention can include up to 2 % by weight of C and preferably between 0.5 and 1.5 % by weight of C. By using a stoichiometrical excess of the reduction agent, the amount of MnO can be reduced, and as can be seen from the following examples a highly pure (98 %) MnS product can be obtained even without highly purified starting materials.

The invention is further illustrated by the following examples:

Example 1

Manganese sulphate ($MnSO_4$ $1H_2O$) obtained from SVERA AB, Sweden, was mixed with 15% particulate charcoal (particle size about 1 mm) and packed in cylindrical SiC-capsules with coke in the center and surrounding the mixture. Each capsule was capable of containing 26 kg of mixture and 9 capsules were simultaneously introduced into the tunnel kiln. The capsules were heated for 36 minutes at a maximum temperature of 1150 - 1180°C. The resulting sponge cakes were crushed, ground and sieved to 45 $\mu$m (325 mesh), leaving a material consisting of MnS having a purity of 98 %. Further refining through grinding and drying is possible.

Example 2

The following experiments were performed as dry processes at reduction temperatures between 700 and 900°C.

    a.

$$MnSO_4 + 25 \rightarrow MnS + 2SO_2$$

    b.

$$MnSO_4 + 2C \rightarrow MnS + 2CO_2$$

    c.

$$MnSO_4 + 4H_2 \rightarrow MnS + 4H_2O$$

Carbon was added in different forms, such as charcoal, coke or black coal. The resulting MnS/MnO ratio depended strongly upon the type of carbon selected. Experiments carried out at 850°C showed, that charcoal gives the highest MnS content.

| Reducing agent | MnS/MnO ratio |
|---|---|
| charcoal | 90/10 |

(continued)

| Reducing agent | MnS/MnO ratio |
|---|---|
| black coal | 72/28 |
| coke | 32/68 |

The experiments were carried out without any excess of reducing agent.

All experiments were carried out with 5 minutes of preheating, a period of 15 minutes of heating to the reduction temperature and a period of 60 minutes at the reduction temperature.

Exemple 3

A slurry was formed by mixing 340 kg of particulate manganese sulphate, 80 kg of particulate carbon in the form of lignite and 80 kg of water. The slurry was pumped into capsules as in example 1 and the capsules were introduced into a tunnel kiln having an atmosphere essentially consisting of carbon monoxide and carbon dioxide. The temperature of the kiln was 1150 - 1180°C.

All the products prepared according to the above examples had a machinability index of the same magnitude as the MnS product prepared according to the US patent 4 676 970.

**Claims**

1. Process for the preparation of manganese sulphide, **characterised** by heating particulate or agglomerate manganese sulphate to a temperature of at least 750°C, in the presence of at least one reduction agent, selected from the group consisting of pit coal, charcoal, lignite and, gaseous X hydrogen and carbon monoxide.

2. Process according to claim 1, **characterised** in that the reduction is carried out as a dry process.

3. Process according to claim 2, **characterised** in that the reduction agent is gaseous hydrogen and/or carbon monoxide and that the manganese sulphate is present in the form of agglomerates.

4. Process according to claim 3, **characterised** in that the reduction is carried out in a shaft furnace.

5. Process according to claim 1, **characterised** in that the reduction is carried out as a wet process.

6. Process according to claim 5, **characterised** in that the reduction agent is a solid, particulate, carbonaceous reducing agent, which is mixed with particulate manganese sulphhate and water, that the obtained slurry is heated to a temperature of at least 750°C, for a period sufficient for allowing an essentially complete reduction of the manganese sulphate.

7. Process according to claim 6, **characterised** in that the reduction is carried out at a temperature of at least 1100°C in a reducing atmosphere.

8. Process according to claim 7, **characterised** in that the reduction is carried out at a temperature of 1100 to 1180°C in an atmosphere essentially consisting of carbon monoxide and carbon dioxide.

9. Process according to any of the claims 5 to 8, **characterised** in that the process is carried out in a tunnel kiln.


**Patentansprüche**

1. Verfahren zum Herstellen von Mangansulfid, **gekennzeichnet durch** Erwärmen von aus Teilchen bestehendem oder agglomeriertem Mangansulfat auf eine Temperatur von mindestens 750°C, in Gegenwart von mindestens einem Reduktionsmittel, ausgewählt aus der Gruppe bestehend aus Grubenkohle, künstliche Kohle, Lignit, und gasförmiger Wasserstoff und Kohlenmonoxid.

2. Verfahren nach Anspruch 1, **dadurch gekennzeichnet**, dass die Reduktion als trockenes Verfahren durchgeführt wird.

3. Verfahren nach Anspruch 2, **dadurch gekennzeichnet**, dass das Reduktionsmittel gasförmiger Wasserstoff und/oder Kohlenmonoxid ist und dass das Mangansulfat in Form von Agglomeraten vorliegt.

4. Verfahren nach Anspruch 3, **dadurch gekennzeichnet**, dass die Reduktion in einem Schachtofen durchgeführt wird.

5. Verfahren nach Anspruch 1, **dadurch gekennzeichnet**, dass die Reduktion als nasses Verfahren durchgeführt wird.

6. Verfahren nach Anspruch 5, **dadurch gekennzeichnet**, dass das Reduktionsmittel ein festes, aus Teilchen bestehendes, kohlenstoffhaltiges Reduktionsmittel ist, welches mit aus Teilchen bestehendem Mangansulfat und Wasser vermischt wird, dass die erhaltene Aufschlämmung auf eine Temperatur von mindestens 750°C während eines Zeitraums erwärmt wird, der ausreicht, um eine im Wesentlichen vollständige Reduktion des Mangansulfats zu gestatten.

7. Verfahren nach Anspruch 6, **dadurch gekennzeichnet**, dass die Reduktion bei einer Temperatur von mindestens 1100°C in einer reduzierenden Atmosphäre durchgeführt wird.

8. Verfahren nach Anspruch 7, **dadurch gekennzeichnet**, dass die Reduktion bei einer Temperatur von 1100 bis 1180°C in einer Atmosphäre durchgeführt wird, die im Wesentlichen aus Kohlenmonoxid und Kohlendioxid besteht.

9. Verfahren nach einem der Ansprüche 5 bis 8, **dadurch gekennzeichnet**, dass das Verfahren in einem Tunnelofen durchgeführt wird.


**Revendications**

1. Procédé pour la préparation de sulfure de manganèse, caractérisé par un chauffage de sulfate de manganèse particulaire ou aggloméré jusqu'à une température d'au moins 750°C en présence d'au moins un agent réducteur choisi parmi du charbon de mine, du charbon de bois, de la lignite, et de l'hydrogène et du monoxyde de carbone gazeux.

2. Procédé selon la revendication 1, caractérisé en ce que la réduction est réalisée comme un procédé par voie sèche.

3. Procédé selon la revendication 2, caractérisé en ce que l'agent réducteur est de l'hydrogène et/ou du monoxyde de carbone gazeux et en ce que le sulfate de manganèse est présent dans la forme d'agglomérats.

4. Procédé selon la revendication 3, caractérisé en ce que la réduction est réalisée dans un fourneau à cuve.

5. Procédé selon la revendication 1, caractérisé en ce que la réduction est réalisée comme un procédé par voie humide.

6. Procédé selon la revendication 5, caractérisé en ce que l'agent réducteur est un agent réducteur solide, particulaire, carboné, lequel est mélangé avec du sulfate de manganèse particulaire et de l'eau, en ce que la suspension obtenue est chauffée jusqu'à une température d'au moins 750°C sur une durée suffisante pour permettre une réduction essentiellement complète du sulfate de manganèse.

7. Procédé selon la revendication 6, caractérisé en ce que la réduction est réalisée à une température d'au moins 1 100°C dans une atmosphère réductrice.

8. Procédé selon la revendication 7, caractérisé en ce que la réduction est réalisée à une température de 1 100 à 1 180°C dans une atmosphère essentiellement constituée de monoxyde de carbone et de dioxyde de carbone.

9. Procédé selon l'une quelconque des revendications 5 à 8, caractérisé en ce que le procédé est réalisé dans un four tunnel.